# EUROPÄISCHE PATENTANMELDUNG

(11) **EP 0 890 386 A1**
(43) Veröffentlichungstag der Anmeldung: **13.01.1999**
(21) Anmeldenummer: 98108747.1
(22) Anmeldetag: 14.05.1998
(51) Int. Cl.: B01D 53/04, B01J 8/00, B01J 8/04

(54) **Adsorber, insbesondere zur Trennung von Sauerstoff und Stickstoff**

(30) Priorität: 11.07.1997 DE 19727741; 08.10.1997 DE 19744374
(71) Anmelder: SGI-PROZESS-TECHNIK GmbH, 63674 Altenstadt (DE)
(72) Erfinder: Amlinger, Heinrich, Dipl.-Ing., 61194 Niddatal (DE)
(74) Vertreter: Schlagwein, Udo, Dipl.-Ing.

(57) **Zusammenfassung**

Ein Adsorber hat einen Behälter (1) mit einem Boden (4), in welchen ein Gaseinlass (6) mündet. Oberhalb dieses Gaseinlasses (6) ist in dem Behälter (1) auf seinem Boden eine durch Siebflächen (9) begrenzte Vorkammer (8) mit Adsorbens vorgesehen, die zugleich eine Gasverteilungskammer bildet. Diese Vorkammer (8) hat einen nach unten hin zu öffnenden Adsorbensauslass (10). Dadurch kann in ihr Adsorbens gewechselt werden, ohne dass zugleich Adsorbens in einen darüber angeordneten Adsorptionsraum (12) entfernt werden muss.

## Beschreibung

Die Erfindung betrifft einen Adsorber, insbesondere zur Trennung von Sauerstoff und Stickstoff aus der Luft, mit einem Behälter, der einen ein Adsorbens enthaltenden Adsorptionsraum hat, und der an seinem Behälterboden einen in eine Gasverteilungskammer führenden Gaseinlass und an seiner oberen Seite einen Gasauslass aufweist und in dem gaseinlassseitig eine Vorkammer mit einem weiteren Adsorbens vorgesehen ist.

Adsorber der vorstehenden Art werden derzeit für die Sauerstoffgewinnung aus der Luft eingesetzt und sind deshalb bekannt. Für die Sauerstoffgewinnung benutzt man als Adsorbens synthetisches Zeolith. Der Behälterboden des bekannten Adsorbers ist nach unten hin gewölbt ausgeführt und zum Behälter hin durch einen Siebboden abgetrennt. Oberhalb des Behälterbodens ist die durch Siebflächen begrenzte Gasverteilungskammer vorgesehen. Der Raum im Behälterboden zwischen der Gasverteilungskammer und dem Siebboden bildet die Vorkammer mit dem weiteren Adsorbens, bei dem es sich bei Sauerstoffgewinnungsanlagen üblicherweise um Aluminiumgel handelt. Das Einfüllen der Adsorbentien in den Adsorber erfolgt von oben, indem man bei zunächst entferntem Siebboden zuerst das Aluminiumgel einschüttet, dann den Siebboden einsetzt und anschließend das Zeolith eingibt.

Als nachteilig bei den bekannten Adsorbern hat sich herausgestellt, dass das Aluminiumgel aufgrund von Umwelteinflüssen der eingegebenen Luft früher seine Wirksamkeit verliert als das Zeolith. Da sich die Vorkammer jedoch unterhalb des Adsorptionsraumes mit dem Zeolith befindet, muss man zum Austausch des Adsorbens in der Vorkammer zugleich das Adsorbens in dem Adsorptionsraum entfernen, was zeitaufwendig ist.

Der Erfindung liegt das Problem zugrunde, einen Adsorber der eingangs genannten Art so auszubilden, dass das Adsorbens in der Vorkammer möglichst rasch ausgewechselt werden kann und dass das Volumen des Behälters des Adsorbers möglichst weitgehend ausgenutzt wird.

Dieses Problem wird erfindungsgemäß dadurch gelöst, dass die Gasverteilungskammer zugleich als Vorkammer für das weitere Adsorbens ausgebildet ist und einen nach unten hin zu öffnenden Adsorbensauslass hat.

Bei einem solchen Adsorber wird die bisher ausschließlich der Gasverteilung dienende und deshalb leer bleibende Gasverteilungskammer für die Unterbringung des weiteren Adsorbens genutzt. Hierdurch wird die Gasverteilung in der Hauptadsorptionskammer verbessert, weil das Adsorbens in der Gasverteilungskammer zu einer Vergleichmäßigung der Gasströmung beiträgt. Weiterhin kann dank der Erfindung der bisher für das weitere Adsorbens verwendete Raum außerhalb der Gasverteilungskammer anderweitig genutzt werden und beispielsweise zur Vergrößerung der Hauptadsorptionskammer beitragen, indem er im Falle einer Sauerstoffgewinnungsanlage ebenfalls mit Zeolith gefüllt wird.

Eine besonders gleichmäßige Gasverteilung erreicht man, wenn gemäß einer Weiterbildung der Erfindung am Behälterboden ein sich bis zum bodenseitigen Querschnitt der Vorkammer erweiternder, zu der Vorkammer durch eine Siebfläche abgegrenzter Diffusor mit dem Gaseinlass vorgesehen ist.

Der Adsorbensauslass beeinträchtigt nicht die gleichmäßige Gasverteilung, wenn gemäß einer anderen Ausgestaltung der Erfindung die Vorkammer oberhalb des Gaseinlasses den Adsorbensauslass hat. Dieser kann dabei als geschlossene Fläche ausgebildet sein, so dass das einströmende Gas zur Seite hin abgelenkt wird.

Eine noch bessere Gasverteilung erreicht man, wenn zwischen dem Adsorbensauslass und dem Gaseinlass in dem Diffusor ein Prallblech angeordnet ist.

Das einströmende Gas wird nach dem Verlassen der Vorkammer gleichmäßig der eigentlichen Adsorptionskammer zugeführt, wenn die Vorkammer sich im Querschnitt nach oben hin verjüngt.

Zum Einfüllen des Adsorbens in die Vorkammer ist es vorteilhaft, wenn von der Oberseite des Behälters her eine Nachfüllleitung für Adsorbens in die Vorkammer mündet.

Vorteilhaft ist es auch, wenn gemäß einer anderen Weiterbildung der Erfindung der Boden des Behälters nach außen hin gewölbt ausgeführt und durch einen Siebboden von dem Adsorptionsraum abgetrennt ist und wenn der Raum in dem Boden zwischen der ersten Vorkammer und dem Siebboden eine zweite Vorkammer mit Adsorbens bildet. Diese zweite Vorkammer kann man ebenfalls beispielsweise mit Aluminiumgel füllen. Da ihr die zugleich die Luftverteilungskammer bildende Vorkammer mit Aluminiumgel vorgeschaltet ist, wird das Aluminiumgel in der zweiten Vorkammer weniger belastet als das in der ersten Vorkammer, so dass es eine gleich lange Lebensdauer hat wie das Zeolith in der Adsorptionskammer und deshalb für die zweite Vorkammer keine Möglichkeit eines Austausch des Adsorbens ohne gleichzeitiges Entfernen des Zeolithes vorgesehen sein muss.

Eine andere, vorteilhafte Ausführungsform der Erfindung besteht darin, dass der Gasauslass durch einen Hals gebildet ist und der Adsorptionsraum bis in den Hals reicht und dass der Adsorptionsraum im Hals durch einen axial verschieblichen, auf dem Adsorbens ruhenden Beschwerkorb begrenzt ist. Durch diese Gestaltung lässt sich eine Fixierung des Molekularbettes erreichen, so dass durch die Gasströmung hervorgerufene Bewegungen des Adsorbens und der dadurch hervorgerufene Abrieb vermieden werden.

Das Gas strömt im Bereich des Halses radial aus dem Adsorptionsraum heraus oder beim Spülen in ihn hinein, so dass sich besonders geringe Strömungswiderstände ergeben, wenn der Adsorptionsraum in dem Hals durch einen Siebkorb begrenzt ist, welcher den Beschwerkorb aufnimmt und zur Bildung eines Ringraumes radialen Abstand von der inneren Mantelfläche des Halses hat und der im Inneren des Behälters mit einem über den gesamten Querschnitt des Behälters reichenden Siebkonus Verbindung hat, durch den zwischen ihm und dem oberen Boden des Behälters ein mit dem Ringraum in Verbindung stehender freier Strömungsraum gebildet ist.

Zur weiteren Verbesserung der Gasströmung trägt es bei, wenn der Beschwerkorb als Boden ein Prallblech hat und auf dem Prallblech im Beschwerkorb Kugeln aus Stahl oder einem anderen schweren Werkstoff ruhen.

Der Strömungswiderstand ist insgesamt besonders gering, wenn im Bereich des Überganges des Siebkorbes vom Halsbereich zu dem Siebkonus im Behälter ein Gasumlenkring zur Umlenkung der Strömung von dem Ringraum in den Strömungsraum zwischen dem Siebkonus und dem oberen Boden des Behälters angeordnet ist.

Die Abdichtung zwischen dem Beschwerkorb und dem Adsorbens im Halsbereich kann auf einfache Weise dadurch erfolgen, dass zwischen dem Beschwerkorb und dem Adsorbens im Halsabschnitt des Siebkorbes ein Gewebeschichtkörper angeordnet ist.

Ein Hereinrutschens des Beschwerkorbes in den Behälter bei nicht eingefülltem Adsorbens lässt sich dadurch ausschließen, dass der Halsbereich des Siebkorbes mehrere radial in ihn hineinragende Stifte hat.

Auf einen vom Boden des Behälters nach unten ragenden Diffusor kann man verzichten, so dass der Behälter nur geringfügig über seinen Boden hinaus nach unten ragt, wenn vom Gaseinlass ein zylindrischer Siebkorb in die erste Vorkammer ragt.

Die üblicherweise mit Alugel gefüllte erste Vorkammer kann besonders großvolumig ausgebildet werden, wenn sie mit einem Siebkegel über den Siebboden des Behälters hinaus in den Behälter ragt.

Die Erfindung lässt zahlreiche Ausführungsformen zu. Zwei davon sind in der Zeichnung dargestellt und werden nachfolgend beschrieben. Die Zeichnung zeigt in
- Fig. 1: eine Seitenansicht eines Adsorbers nach der Erfindung,
- Fig.2: einen senkrechten Schnitt durch eines zweite Ausführungsform eines Adsorbers nach der Erfindung.

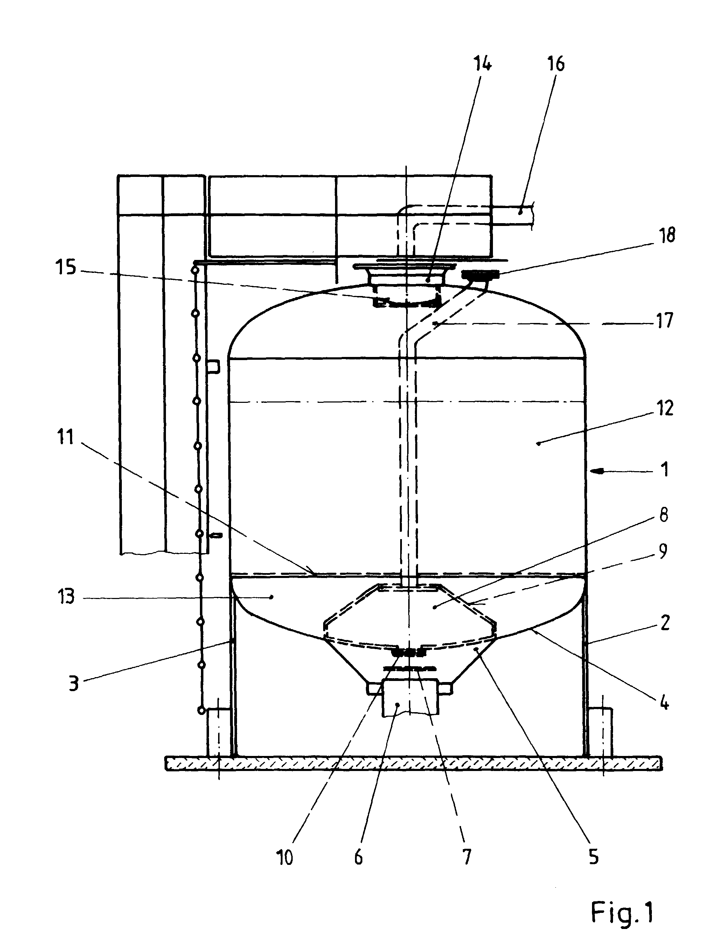

Die Figur 1 zeigt einen angeordneten Behälter 1, der auf Füßen 2, 3 stehend angeordnet ist. Nach unten hin wird der Behälter 1 von einem nach außen gewölbten Behälterboden 4 begrenzt. An der Außenseite des Behälterbodens 4 ist mittig ein Diffusor 5 angeschlossen, welcher einen Gaseinlass 6 hat. In diesem Diffusor 5 ist mit Abstand zum Gaseinlass 6 ein Prallblech 7 angeordnet.

Behälterinnenseitig ist auf dem Behälterboden 4 eine nach oben hin sich konisch verjüngende Vorkammer 8 vorgesehen, welche allseitig durch Siebflächen 9 begrenzt wird. Oberhalb des Prallbleches 7 hat die Vorkammer 8 einen Adsorbensauslass 10, der zum Auswechseln des Adsorbens in der Vorkammer 8 geöffnet werden kann.

Oberhalb des nach außen hin gewölbten Behälterbodens 4 ist in dem Behälter 1 ein seinen gesamten Querschnitt überbrückender Siebboden 11 angeordnet, der nach unten hin einen Adsorptionsraum 12 begrenzt. Der Raum im Behälterboden 4 unterhalb dieses Siebbodens 11 und außerhalb der Vorkammer 8 kann eine zweite Vorkammer 13 bilden.

Der Behälter 1 hat an seiner Oberseite einen Gasauslass 14, an welchem ein Siebkorb 15 angeschlossen ist, über dessen siebförmige Mantelfäche das Gas seitlich einströmt und von dem aus es den Behälter über eine Gasentnahmeleitung 16 verlässt. Der Siebkorb 15 hat einen als nach oben hin konkav gekrümmtes Prallblech ausgebildeten Boden, so dass beim Spülen und Umfüllen, wenn über die Gasentnahmeleitung 16 Gas in den Behälter 1 gelangt, dieses nicht unmittelbar auf das Adsorbens im Adsorptionsraum 12 trifft.

Ebenfalls von der Oberseite des Behälters 1 her führt eine Nachfüllleitung 17 bis in die Vorkammer 8. Diese Nachfüllleitung 17 hat außerhalb des Behälters 1 einen Nachfüllstutzen 18. Dadurch kann man von oben her die Vorkammer 8 mit Adsorbens beschicken.

Wenn der dargestellte Adsorber zur Sauerstoffgewinnung aus Luft eingesetzt werden soll, dann füllt man in den Adsorptionsraum 12 Zeolith und in die Vorkammer 8 Aluminiumgel. Die zweite Vorkammer 13 kann vor dem Einsetzen des Siebbodens 11 und dem Einfüllen des Zeoliths ebenfalls mit Aluminiumgel gefüllt werden. Möglich ist es jedoch auch, auf den Siebboden 11 zu verzichten und die zweite Vorkammer 13 ebenfalls mit Zeolith zu füllen, um das Volumen des Adsorptionsraumes 12 zu vergrößern.

In der Adsorptionsphase strömt Luft vom Gaseinlass 6, durch die Vorkammer 8, dann durch die Vorkammer 13 in den Adsorptionsraum 12 und von dort über den Siebkorb 15 und den Gasauslass 14 in die Gasentnahmeleitung 16. Ist das Aluminiumgel in der Vorkammer 8 nicht mehr ausreichend wirksam, dann kann man bei Stillstand der Anlage den Adsorbensauslass 10 öffnen und das Aluminiumgel nach unten hin aus dem Behälter 1 rutschen lassen. Ein Nachfüllen ist anschließend über den Nachfüllstutzen 18 möglich.

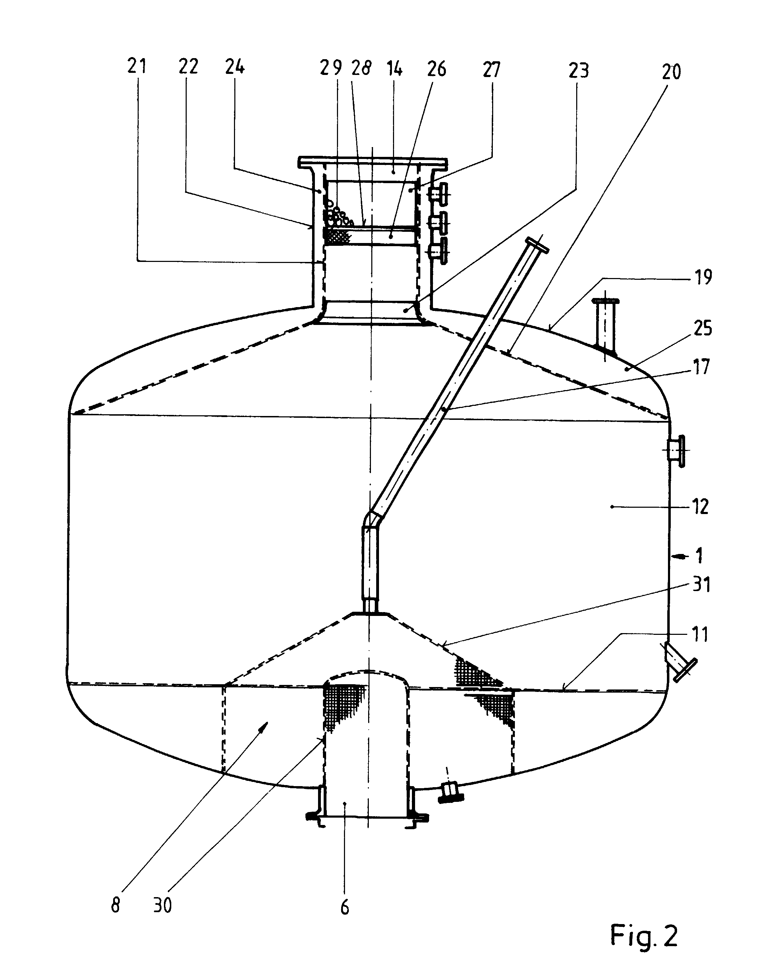

Bei der Ausführungsform nach Figur 2 ist im Behälter 1 unterhalb seines oberen Bodens 19 ein Siebkonus 20 angeordnet, welcher nach oben hin in einen Siebkorb 21 übergeht. Dieser Siebkorb 21 führt in einen Hals 22, welcher den Gasauslass 14 des Behälters 1 bildet. Im Übergangsbereich zwischen dem Siebkonus 20 und dem Siebkorb 21 befindet sich ein Gasumlenkring 23. Zwischen dem Siebkorb 21 und dem Hals 22 des Gasauslasses 14 ist ein Ringraum 24 und zwischen dem oberen Boden 19 und dem Siebkonus 20 ein Strömungsraum 25 gebildet.

Der mit dem Adsorbens gefüllte Adsorptionsraum 12 reicht bis in den Hals 22 hinein und wird nach oben hin von einem Gewebeschichtkörper 26 begrenzt. Auf diesem Gewebeschichtkörper 26 ruht axial im Hals 22 verschieblich ein Beschwerkorb 27, der an seiner unteren Stirnseite von einem Prallblech 28 abgeschlossen wird. In den Beschwerkorb 27 sind Kugeln 29 aus Stahl gefüllt.

Der produzierte Sauerstoff strömt über den Siebkonus 20 in den Strömungsraum 25 und von dort über den Ringraum 24 im Hals 22 zum Gasauslass 14. Beim Spülen trifft das vom Gasauslass 14 in den Behälter 1 einströmende Gas zunächst auf den Beschwerkorb 27 mit den Kugeln 29. Das dort angeordnete Prallblech 28 leitet das Gas in den Ringraum 24 um, von wo es entlang des Gasumlenkringes 23 in den Strömungsraum 25 gelangt. Von dort strömt es gleichmäßig in das Adsorbens des Adsorptionsraumes 12.

Die in der Figur 2 gezeigte Ausführungsform unterscheidet sich weiterhin durch eine abweichende Ausbildung des Gaseinlasses 6 von der nach der Figur 1. Von diesem Gaseinlass 6 ragt ein Siebkorb 30 in die Vorkammer 8. Dieser Siebkorb 30 sorgt für eine gleichmässige Strömung in der Vorkammer 8 und ermöglicht es, das in ihm eingefüllte Alugel nach unten hin zu entleeren, wenn man den Siebkorb 30 aus dem Gaseinlass 6 entfernt.

Weiterhin ragt bei der Ausführungsform nach Figur 2 die erste Vorkammer 8 mit einem Siebkegel 31 über den Siebboden 11 nach oben hin hinaus in den Adsorptionsraum 12. Dadurch hat die Vorkammer 8 ein besonders großes Volumen. Weiterhin verbessert der Siebkegel 31 die Gasströmung in der Adsorptionskammer 12.

### Bezugszeichenliste

- 1: Behälter
- 2: Fuß
- 3: Fuß
- 4: Boden
- 5: Diffusor

- 6: Gaseinlass
- 7: Prallblech
- 8: Vorkammer
- 9: Siebfläche
- 10: Adsorbensauslass

- 11: Siebboden
- 12: Adsorptionsraum
- 13: Vorkammer
- 14: Gasauslass
- 15: Siebkorb

- 16: Gasentnahmeleitung
- 17: Nachfüllleitung
- 18: Nachfüllstutzen
- 19: oberer Boden
- 20: Siebkonus

- 21: Siebkorb
- 22: Hals
- 23: Gasumlenkring
- 24: Ringraum
- 25: Strömungsraum

- 26: Gewebeschichtkörper
- 27: Beschwerkorb
- 28: Prallblech
- 29: Kugel
- 30: Siebkorb

- 31: Siebkegel

## Patentansprüche

1. Adsorber, insbesondere zur Trennung von Sauerstoff und Stickstoff aus der Luft, mit einem Behälter (1), der einen ein Adsorbens enthaltenden Adsorptionsraum (12) hat, und der an seinem Boden (4) einen in eine Gasverteilungskammer führenden Gaseinlass (6) und an seiner oberen Seite einen Gasauslass (14) aufweist und in dem gaseinlassseitig eine Vorkammer (8) mit einem weiteren Adsorbens vorgesehen ist, **dadurch gekennzeichnet,** dass die Gasverteilungskammer zugleich als Vorkammer (8) für das weitere Adsorbens ausgebildet ist und einen nach unten hin zu öffnenden Adsorbensauslass (10) hat.

2. Adsorber nach Anspruch 1, **dadurch gekennzeichnet**, dass am Boden (4) des Behälters (1) ein sich bis zum bodenseitigen Querschnitt der Vorkammer (8) erweiternder, zu der Vorkammer (8) durch eine Siebfläche (9) abgegrenzter Diffusor (5) mit dem Gaseinlass (6) vorgesehen ist.

3. Adsorber nach Anspruch 2, **dadurch gekennzeichnet,** dass die Vorkammer (8) oberhalb des Gaseinlasses (6) den Adsorbensauslass (10) hat.

4. Adsorber nach Anspruch 3, **dadurch gekennzeichnet,** dass zwischen dem Adsorbensauslass (10) und dem Gaseinlass (6) in dem Diffusor (5) ein Prallblech (7) angeordnet ist.

5. Adsorber nach zumindest einem der vorangehenden Ansprüche, **dadurch gekennzeichnet,** dass die Vorkammer (8) sich im Querschnitt nach oben hin verjüngt.

6. Adsorber nach Anspruch 5, **dadurch gekennzeichnet,** dass von der Oberseite des Behälters (1) her eine Nachfüllleitung (17) für Adsorbens in die Vorkammer (8) mündet.

7. Adsorber nach zumindest einem der vorangehenden Ansprüche, **dadurch gekennzeichnet,** dass der Boden (4) des Behälters (1) nach außen hin gewölbt ausgeführt und durch einen Siebboden (11) von dem Adsorptionsraum (12) abgetrennt ist und der Raum in dem Boden (4) zwischen der ersten Vorkammer (8) und dem Siebboden (11) eine zweite Vorkammer (13) mit Adsorbens bildet.

8. Adsorber nach zumindest einem der vorangehenden Ansprüche, **dadurch gekennzeichnet**, dass der Gasauslass (14) durch einen Hals (22) gebildet ist und der Adsorptionsraum (12) bis in den Hals (22) reicht und dass der Adsorptionsraum (12) im Hals (22) durch einen axial verschieblichen, auf dem Adsorbens ruhenden Beschwerkorb (27) begrenzt ist.

9. Adsorber nach Anspruch 8, **dadurch gekennzeichnet,** dass der Adsorptionsraum (12) in dem Hals (22) durch einen Siebkorb (21) begrenzt ist, welcher den Beschwerkorb (27) aufnimmt und zur Bildung eines Ringraumes (24) radialen Abstand von der inneren Mantelfläche des Halses (22) hat und der im Inneren des Behälters (1) mit einem über den gesamten Querschnitt des Behälters (1) reichenden Siebkonus (20) Verbindung hat, durch den zwischen ihm und dem oberen Boden (19) des Behälters (1) ein mit dem Ringraum (24) in Verbindung stehender freier Strömungsraum (25) gebildet ist.

10. Adsorber nach Anspruch 8 oder 9, **dadurch gekennzeichnet,** dass der Beschwerkorb (27) als Boden ein Prallblech (28) hat und auf dem Prallblech (28) im Beschwerkorb (27) Kugeln (29) aus Stahl oder einem anderen schweren Werkstoff ruhen.

11. Adsorber nach zumindest einem der Ansprüche 8 - 10, **dadurch gekennzeichnet,** dass im Bereich des Überganges des Siebkorbes (21) vom Halsbereich zu dem Siebkonus (20) im Behälter (1) ein Gasumlenkring (23) zur Umlenkung der Strömung von dem Ringraum (24) in den Strömungsraum (25) zwischen dem Siebkonus (20) und dem oberen Boden (19) des Behälters (1) angeordnet ist.

12. Adsorber nach zumindest einem der Ansprüche 8 - 11, **dadurch gekennzeichnet**, dass zur Abdichtung zwischen dem Beschwerkorb (27) und dem Adsorbens im Halsabschnitt des Siebkorbes (21) ein Gewebeschichtkörper (26) angeordnet ist.

13. Adsorber nach zumindest einem der Ansprüche 8 - 12, **dadurch gekennzeichnet,** dass zur Vermeidung eines Hereinrutschens des Beschwerkorbes (27) in den Behälter (1) bei nicht eingefülltem Adsorbens der Halsbereich des Siebkorbes (21) mehrere radial in ihn hineinragende Stifte hat.

14. Adsorber nach zumindest einem der vorangehenden Ansprüche, **dadurch gekennzeichnet,** dass vom Gaseinlass (6) ein zylindrischer Siebkorb (30) in die erste Vorkammer (8) ragt.

15. Adsorber nach Anspruch 14, **dadurch gekennzeichnet,** dass die erste Vorkammer (8) mit einem Siebkegel (31) über den Siebboden (11) des Behälters (1) hinaus in den Behälter (1) ragt.
